# EUROPEAN PATENT APPLICATION

(11) **EP 1 758 355 A2**
(43) Date of publication of application: **28.02.2007**
(21) Application number: 06014592.7
(22) Date of filing: 13.07.2006
(51) Int. Cl.: H04M 1/725

(54) **Method for determing the position and the direction of movement of a portable terminal**

(30) Priority: 23.08.2005 KR 20050077351
(71) Applicant: Samsung Electronics Co., Ltd., Yeongtong-gu Suwon-si, Gyeonggi-do (KR)
(72) Inventor: Kim, Joo-Sub, Suwon-si Geyonggi-do (KR); Kim, Yun-Hyang, Suwon-si Geyonggi-do (KR); Kim, Bo-Keun, Suwon-si Geyonggi-do (KR)
(74) Representative: Lang, Johannes

(57) **Abstract**

A method and portable terminal for searching for a constellation using the portable terminal are provided, in which position information, direction information, and time information of the portable terminal are extracted, a constellation corresponding to the extracted position information (170), direction information (180), and time information of the portable terminal is searched, a shape of the searched constellation is displayed (160), an enlargement/reduction function is performed while displaying the constellation shape, detailed information regarding the displayed constellation is displayed, position information, direction information, and time information of the portable terminal, and the shape of the constellation and the constellation information are stored, the position information, the direction information, and the time information of the portable terminal, and the shape of the constellation and the constellation information are transmitted to a receiver, and the constellation shape is set and displayed as a background image of the portable terminal.

## Description

### BACKGROUND OF THE INVENTION

### 1. Field of the Invention

The present invention relates to a method of searching for a constellation in a portable terminal and a portable terminal implementing the same. More particularly, the present invention relates to a method and a portable terminal for searching for a constellation using the portable terminal.

### 2. Description of the Related Art

Constellations are named after animals, objects, and mythological characters. The shapes of the constellations are obtained by a connection of fixed stars which are close to earth or can be seen easily in the sky at night.

The constellations can be discerned either by using celestial body observation devices or with naked eyes. However, discerning the constellations by the naked eyes without using any separate celestial body observation device may be difficult.

Conventionally, portable terminals, which include a constellation search function so that a user can discern constellations with the naked eyes without using any celestial body observation devices, have been suggested.

However, since the constellation search functions of the portable terminals are performed by connecting a specific constellation to a base station or by technologies using cameras and GPS, the functions are not easily applicable. Moreover, using such functions generates increased costs.

Accordingly, there is a need for an improved method of searching for a constellation using a portable terminal.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention is to provide a method of searching for a constellation using a portable terminal.

In order to accomplish the object of exemplary embodiments of the present invention, there is provided a method of searching for a constellation in a portable terminal, in which constellation search information for searching for a constellation located in a designated direction through a portable terminal is extracted, if a user selects a search for constellation in the portable terminal; and a constellation shape corresponding to the extracted constellation search information is displayed.

According to an exemplary embodiment of the present invention, there is also provided a method of searching for a constellation in a portable terminal, in which position information, direction information, and time information of the portable terminal are extracted, if a user selects a search for constellation in the portable terminal; a constellation corresponding to the extracted position information, direction information, and time information of the portable terminal is searched; the shape of the searched constellation is displayed; an enlargement/reduction function is performed while displaying the constellation shape, if a user selects enlargement/reduction during the display of the constellation shape; detailed information on the displayed constellation is displayed, if a user selects detailed information on the constellation during the display of the constellation shape; position information, direction information, and time information of the portable terminal, and the shape of the constellation and the constellation information are stored, if a user stores the information and the shape during the display of the constellation shape; the position information, the direction information, and the time information of the portable terminal, and the shape of the constellation and the constellation information are transmitted to a receiver, if a user selects transmission during the display of the constellation shape; and the constellation shape is set and displayed as a background image of the portable terminal, if a user selects display of the background image during the display of the constellation shape.

### BRIEF DESCRIPTION OF THE DRAWINGS

The above and other objects, features, and advantages of certain exemplary embodiments of the present invention will be more apparent from the following detailed description taken in conjunction with the accompanying drawings, in which:
FIG. 1 is a block diagram for showing a structure of a portable terminal according to an exemplary embodiment of the present invention; and
FIG. 2 is a flow chart for describing a method of searching for a constellation in a portable terminal according to an exemplary embodiment of the present invention. Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes can be made without departing from the scope and spirit of the invention. Also, descriptions of well-known functions and constructions are omitted for clarity and conciseness.

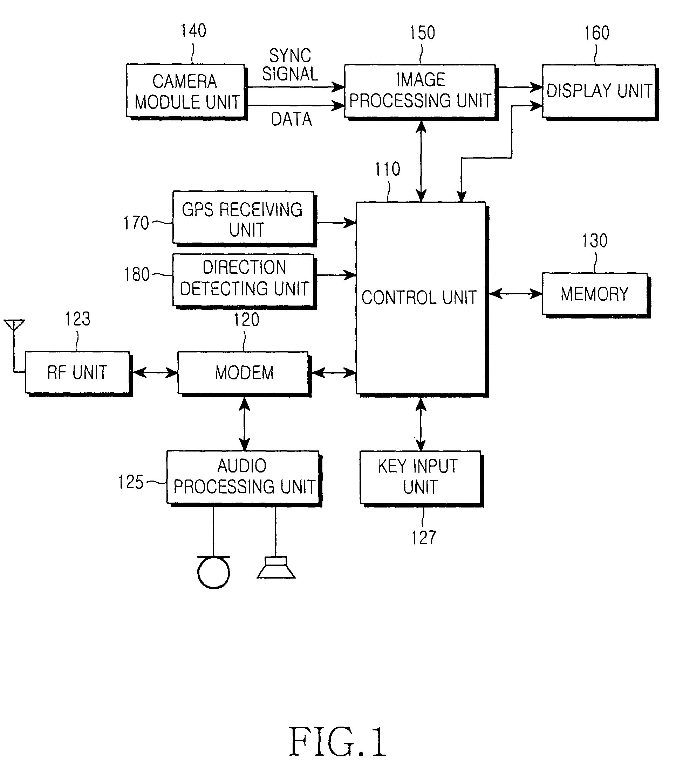

FIG. 1 is a block diagram for showing the structure of a portable terminal according to an exemplary embodiment of the present invention, which includes a camera module.

Referring to FIG. 1, an RF unit 123 performs a radio communication function of the portable terminal. The RF unit 123 includes an RF transmitter raising and amplifying the frequencies of transmitted signals, and an RF receiver for amplifying received signals to include low noise and for lowering the frequencies. A modem 120 includes a transmitter for encoding and modulating the transmitted signals, and a receiver for demodulating and decoding the received signals. An audio processing unit 125 may include a codec, which includes a data codec for processing packet data and an audio codec for processing audio signals including voice. The audio processing unit 125 converts digital audio signals received in the modem 120 to analog signals through the audio codec in order to reproduce the digital audio signals, or converts analog audio signals transmitted from the microphone to digital audio signals through the audio codec and transmits the digital audio signals to the modem 120. The codec may be included separately or provided in a control unit 110.

A memory 130 may include a program memory and a data memory. According to an exemplary embodiment of the present invention, the program memory stores programs for controlling the general operations of the portable terminal and programs for controlling the portable terminal to search for a constellation based on position information, direction information, and time information of the portable terminal,. The data memory temporarily stores data generated while performing programs of the portable terminal. In addition, the memory 130 stores a constellation database, in which constellation information corresponding to position information, direction information, and time information on a constellation is stored.

A control unit 110 controls the overall operations of the portable terminal. The control unit 110 may include the modem and the codec. The control unit 110 extracts constellation search information in the portable terminal according to an exemplary embodiment of the present invention. The control unit 110 controls the portable terminal to search for and display a constellation using the extracted constellation search information, which includes position information, direction information, and time information of the portable terminal.

A GPS receiving unit 170 receives and outputs the position information of the portable terminal. The GPS receiving unit 170 outputs the position information of the portable terminal for searching for a constellation according to an exemplary embodiment of the present invention.

A direction detecting unit 180 performs a compass function by which the direction of the portable terminal is detected. The direction detecting unit 180 detects and outputs a direction where the portable terminal faces, or detects and outputs a direction selected by a user. The direction detecting unit 180 outputs the direction information of the portable terminal for searching for a constellation according to an exemplary embodiment of the present invention. The direction faced by the portable terminal, and selected by a user preferably includes at least one set of four directions, eight directions, sixteen directions, and thirty two directions. In an exemplary embodiment of the present invention, the set of directions includes four directions (for example, north, south, east, and west).

A camera module unit 140 photographs image data, and includes a camera sensor for converting photographed optical signals to electrical signals, and a signal processing section for converting analog image signals photographed by the camera sensor to digital data. In an exemplary implementation, the camera sensor includes a CCD sensor, and the signal processing section includes a Digital Signal Processor (DSP). The camera sensor and the signal processing section may be included integrally or separately.

An image processing unit 150 generates screen data for displaying image signals output in the camera module unit 140. The image processing unit 150 processes image data output from the camera module unit 140 in frame units, and outputs frame image data according to characteristics and size of the display unit 160. The image processing unit 150 includes an image codec, and compresses the frame image data displayed in the display unit 160 in a predetermined manner, or restores the compressed frame image data to the original frame image data. In an exemplary implementation, the image codec may be a JPEG codec, MPEG4 codec, Wavelet codec, and the like. The image processing unit 150 may include an On Screen Display (OSD) function and outputs OSD data according to the size of the screen displayed under the control of the control unit 110.

The display unit 160 displays image signals output from the image processing unit 150 on the screen, and displays user data output from the control unit 110. In an exemplary implementation, the display unit 160 includes a liquid crystal display (LCD). Accordingly, the display unit 160 includes an LCD controller, memory for storing image data, and LCD device. If the LCD includes a touch screen, the LCD may also function as an input section. Further, the display unit 160 may display various direction information of the portable terminal according to an exemplary embodiment of the present invention. Furthermore, the display unit 160 preferably displays the searched constellation and information regarding the constellation, according to an exemplary embodiment of the present invention.

A key input unit 127 includes keys for inputting number and letter information, and function keys for setting various functions. Further, the key input unit 127 may include keys for performing constellation search according to an exemplary embodiment of the present invention.

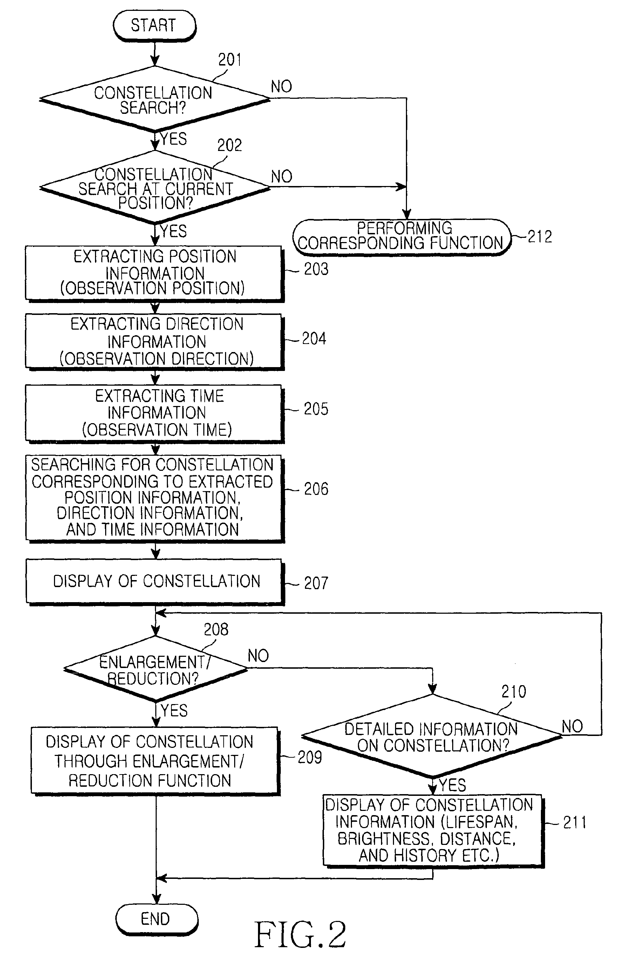

The operation of searching for a constellation in the above-mentioned portable terminal will be described in detail with reference to FIG. 2.

FIG. 2 is a flow chart for describing the process of searching for a constellation in the portable terminal according to an exemplary embodiment of the present invention.

Referring to FIG. 2, if a user selects a constellation search in the portable terminal, the control unit 110 detects the selection in step 201 and displays various types of constellation search.

If a user selects the constellation search at a current position among the various types of the constellation search, the control unit 110 detects the selection in step 202 and performs processes of extracting constellation search information for searching for the constellation at the current position in steps 203 to 205. Otherwise, a different corresponding function is formed in step 212.

In step 203, the GPS receiving unit 170 outputs current position information of the portable terminal to the control unit 110. The control unit 110, which has received the current position information of the portable terminal from the GPS receiving unit 170, controls the portable terminal to extract an observation position for searching for the constellation through the current position information of the portable terminal.

Further, in step 204, the direction detecting unit 180 outputs the direction information of the portable terminal to the control unit 110. If the direction detecting unit 180 detects the direction where the portable terminal faces or the direction selected by a user, which includes, for example, at least one of north, south, east, and west, the direction detecting unit 180 outputs the detected direction information to the control unit 110. The direction where the portable terminal faces may be the direction where the upper portion of the portable terminal faces, such as, the direction where the antenna faces. The control unit 110, which has received the direction information of the portable terminal from the direction detecting unit 180, controls the portable terminal to extract the observation direction for searching for the constellation through the current direction information of the portable terminal.

Further, in step 205, the control unit 110 detects the current time information displayed in the portable terminal. The control unit 110 also controls the portable terminal to extract the observation time for searching for the constellation through the detected current time information of the portable terminal.

If the position information corresponding to the observation position, the direction information corresponding to the observation direction, and the time information corresponding to the observation time are extracted in steps 203 to 205, the control unit 110 proceeds to step 206 in which the constellation corresponding to the extracted position information, direction information, and time information is searched for through the constellation database.

Further, if the constellation corresponding to the extracted position information, direction information, and time information is searched in step 206, the control unit 110 detects the search and proceeds to step 207 in which the searched constellation is displayed. In step 207, the basic information regarding the displayed constellation, for example, the name of the constellation, may be displayed together with the constellation. The basic information regarding the constellation may also be selected by a user.

If a user selects enlargement/reduction during the display of the constellation in step 207, the control unit 110 detects the selection in step 208 and proceeds to step 209 in which the constellation is displayed in the display unit 160 either enlarged or reduced.

Further, if a user selects detailed information on the constellation during the display of the constellation in step 207, the control unit 110 detects the selection in step 210 and proceeds to step 211 in which the detailed information on the constellation, such as, the name, lifespan, brightness, distance, and history of the constellation, is displayed.

On the other hand, if a user store the constellation shape and the constellation information during the display of the constellation in step 207, the control unit 110 detects the selection and controls the portable terminal to store the constellation shape and the constellation information, together with the current position information, direction information, and time information of the portable terminal.

Further, if a user selects transmission during the display of the constellation in step 207, the control unit 110 detects the selection and controls the portable terminal to transmit to a receiver the constellation shape and the constellation information, together with the current position information, direction information, and time information of the portable terminal.

On the other hand, if a user selects display of background image during the display of the constellation in step 207, the control unit 110 detects the selection and controls the portable terminal to set and display the shape of the constellation as the background image of the portable terminal.

Further, if a user selects birthday constellation search among the various types of constellation search, the control unit 110 detects the selection and displays an input window for inputting a birthday. If a birthday is input in the input window, the control unit 110 detects the input and controls the portable terminal to display the shape of the constellation corresponding to the input birthday, and the constellation information. The control unit 110 controls the portable terminal to display the position information on the constellation corresponding to the input birthday through the position information of the portable terminal, which has been extracted by the GPS receiving unit 170.

Further, if a user stores the constellation shape and the constellation information during the display of the constellation shape and the constellation information corresponding to the input birthday, the control unit 110 controls the portable terminal to store the shape and the information regarding the constellation corresponding to the input birthday. Further, if a user selects transmission during the display of the constellation shape and the constellation information corresponding to the input birthday, the control unit 110 detects the selection and controls the portable terminal to transmit the constellation shape and the constellation information corresponding to the input birthday. On the other hand, if a user selects display of background image during the display of the constellation shape and the constellation information corresponding to the input birthday, the control unit 110 detects the selection and controls the portable terminal to set and display the shape of the constellation corresponding to the input birthday.

According to exemplary embodiments of the present invention, by providing a method for searching for a constellation in a portable terminal, a user may discern constellations, which are easily observed, and be informed of detailed information regarding a searched constellation. In addition, the constellation may be accurately observed, based on observation direction and observation time.

While the invention has been shown and described with reference to a certain exemplary embodiments thereof, it will be understood by those skilled in the art that various changes in form and details may be made therein without departing from the spirit and scope of the invention as defined by the appended claims.

## Claims

1. A method of searching for a constellation in a portable terminal, the method comprising:
extracting constellation search information for searching for a constellation located in a designated direction through a portable terminal, if a search for constellation in the portable terminal is selected; and
displaying a constellation shape corresponding to the extracted constellation search information.

2. A method according to claim 1, wherein the constellation search information comprises at least one of position information, direction information, and time information of the portable terminal.

3. A method according to claim 2, wherein the direction information comprises a direction faced by the portable terminal.

4. A method according to claim 2, wherein the direction information comprises a selected direction.

5. A method according to claim 1, further comprising displaying basic information regarding the displayed constellation during the display of the constellation shape.

6. A method according to claim 1, further comprising:
performing an enlargement/reduction function while displaying the constellation shape, if enlargement/reduction is selected during the display of the constellation shape.

7. A method according to claim 1, further comprising:
displaying detailed information regarding the displayed constellation, if detailed information regarding the constellation is selected during the display of the constellation shape.

8. A method according to claim 1, further comprising:
storing at least one of the constellation shape, the constellation information, and the constellation search information.

9. A method according to claim 1, further comprising:
transmitting at least one of the constellation shape, the constellation information, and the constellation search information to a receiver, if transmission is selected during the display of the constellation shape.

10. A method according to claim 1, further comprising:
setting and displaying the shape of the constellation as a background image of the portable terminal, if a display of the background image is selected during the display of the constellation shape.

11. A method according to claim 1, further comprising:
displaying the shape of a constellation corresponding to an input birthday, constellation information, and position information regarding the constellation, which the shape of the constellation corresponding to the input birthday is viewed at a current position of the portable terminal, if a birthday constellation search is selected in the portable terminal;
storing the shape of the constellation corresponding to the input birthday and the constellation information;
transmitting at least one of the shape of the constellation corresponding to the input birthday and the constellation information to a receiver, if transmission is selected; and
setting and displaying the shape of the constellation corresponding to the input birthday as a background image of the portable terminal, if a display of the background image is selected.

12. A method of searching for a constellation in a portable terminal, the method comprising:
extracting at least one of position information, direction information, and time information of the portable terminal, if a search for constellation is selected in the portable terminal;
searching for a constellation corresponding to at least one of the extracted position information, direction information, and time information of the portable terminal;
displaying a shape of the searched constellation;
performing an enlargement/reduction function, while displaying the constellation shape, if enlargement/reduction is selected during the display of the constellation shape;
displaying detailed information regarding the displayed constellation, if detailed information regarding the constellation is selected during the display of the constellation shape;
storing at least one of position information, direction information, and time information of the portable terminal, and the constellation shape and the constellation information;
transmitting at least one of the position information, the direction information, and the time information of the portable terminal, and the constellation shape and the constellation information to a receiver, if transmission is selected during the display of the constellation shape; and
setting and displaying the constellation shape as a background image of the portable terminal, if a display of the background image is selected during the display of the constellation shape.

13. A method according to claim 12, wherein the direction information comprises a direction where the portable terminal faces.

14. A method according to claim 12, wherein the direction information comprises a selected direction.

15. A method according to claim 12, further comprising displaying basic information regarding the displayed constellation during the display of the shape of the searched constellation.

16. A method according to claim 12, wherein the detailed information comprises at least one of a lifespan, brightness, distance, and history of the constellation.

17. A method according to claim 12, further comprising:
displaying at least one of the shape of a constellation, constellation information, and position information regarding the constellation that the shape of the constellation corresponding to the input birthday is viewed at a current position of the portable terminal, if a birthday constellation search is selected in the portable terminal,
wherein the shape of a constellation, the constellation information, and the position information correspond to the input birthday;
storing at least on of a type of constellation, the shape of the constellation, and the constellation information corresponding to the input birthday;
transmitting the shape of the constellation corresponding to the input birthday and the constellation information to a receiver, if transmission is selected; and
setting and displaying the shape of the constellation corresponding to the input birthday as a background image of the portable terminal, if a display of the background image is selected.

18. A portable terminal comprising:
a control unit for searching a constellation;
wherein the controller:
extracts at least one of position information, direction information, and time information of the portable terminal, if a search for constellation is selected in the portable terminal;
searches for a constellation corresponding to at least one of the extracted position information, direction information, and time information of the portable terminal;
displays a shape of the searched constellation;
performs an enlargement/reduction function, while displaying the constellation shape, if enlargement/reduction is selected during the display of the constellation shape;
displays detailed information regarding the displayed constellation, if detailed information regarding the constellation is selected during the display of the constellation shape;
stores at least one of position information, direction information, and time information of the portable terminal, and the constellation shape and the constellation information;
transmits at least one of the position information, the direction information, and the time information of the portable terminal, and the constellation shape and the constellation information to a receiver, if transmission is selected during the display of the constellation shape; and
sets and displays the constellation shape as a background image of the portable terminal, if a display of the background image is selected during the display of the constellation shape.
